# EUROPEAN PATENT SPECIFICATION

(11) **EP 1 409 927 B1**
(45) Date of publication and mention of the grant of the patent: **04.04.2007**
(21) Application number: 01902527.9
(22) Date of filing: 31.01.2001
(51) Int. Cl.: F24D 3/16

(54) **HEAT TRANSFER TILE**
WÄRMETAUSCHPANEEL
DALLE DE TRANSFERT THERMIQUE

(30) Priority: 11.02.2000 GB 0003264
(43) Date of publication of application: 21.04.2004
(73) Proprietor: Cooling Technologies LLC, Ramsey, Isle of Man IM8 1JA (GB)
(72) Inventor: Kennedy, Philip Andrew, Wath Upon Dearne, South Yorksh. S63 7SX (GB)
(74) Representative: Lamb, Martin John Carstairs
(86) International application number: PCT/GB2001/000405
(87) International publication number: WO 2001/059371

(56) References cited:
- WO-A-96/12144
- DE-A- 2 604 879
- DE-A- 3 003 407
- GB-A- 1 180 607
- NL-C- 1 011 440

## Description

This invention relates to a heat transfer tile for use in indoor heating or cooling duties. It is especially concerned with the heating or cooling of rooms in domestic or business premises.

The efficiency of room heating and cooling systems is a matter of increasing concern in order to minimise the energy they consume. Systems which circulate heated or cooled air are commonly employed but air has a low thermal content such that a relatively large volume is required, necessitating relatively large air ducts. The large volumes of air may also create an unacceptable level of noise from vents through which it is supplied. Air heating and cooling relies mainly on good convection and some conduction but derives little or no input from radiation. Radiators receiving hot water from a central boiler are the other main system in current use for heating purposes. These rely largely on radiation into the room, with some conduction to the room air and some convection of it. They are generally effective but have the disadvantages of occupying much of the available wall space in the room and of taking some time to warm up the room from cold. Moreover the traditional types of room radiator are not well suited to cooling duties.

Interest has therefore been growing in the use of heat transfer tiles in room ceilings and walls for one or both of heating and cooling. Tiles have the advantage of providing radiant heating or cooling across a wide surface area without intruding into the usable room space. One previous type of tile comprises a flat metal plate facing the room space with copper tubing attached to the rear surface of the plate. Cooled or heated water is circulated through the copper tubing and heat is transferred to or from it through the metal plate to the room space.

The previous plate/tubing configuration has presented problems in achieving high levels of efficiency in heat transfer between the room and the circulating water. Direct contact between the tubing and plate occurs over only a small portion of the tube circumference. The direct contact can be improved by fins or flanges on the tubing but these significantly increase the cost and complexity of the tile.

GB1180607 discloses a thermal transfer ceiling structure comprising a plate structure including a pair of generally flat facing and backing plates secured in flatwise face-to-face relation to one another, at least one of the plates being formed to provide fluid circulating passage means between the same and the other plate, at least one of plates being for facing into the room.

It is a prime object of the present invention to provide a room heat transfer tile with imporved performance in heat exchange between the ciculating fluid and the room. Other objects include the provision of a tile having an attractive appearance as viewed from the room and having good acoustic properties.

This object is met by a tile according to claim 1 and a method according to claim 16.

Tiles according to the invention offer the advantage of excellent heat contact between the channel conveying the energy transfer fluid and the sheet facing the room. The two-plate configuration of the heat exchange element makes for easy construction of the element and for the selection of the required elongated channel. By appropriate selection of the shape of the elongated channel the energy transfer fluid can be brought into direct contact with a very high proportion of the element surface in contact with the facing sheet. The shaped plate also allows for much greater flexibility in the fluid flow path than can be provided by the conventional copper tubing. Preferably, the first plate is flat and the second plate is shaped. The tiles of the invention are especially well suited to use as ceiling tiles for cooling duties. It is however emphasised that the tiles are also well suited to use on wall or floor surfaces and to use as heating panels. Used in association with a heat pump or similar device they can be used for both heating and cooling, thereby simplifying a room's heating and cooling infrastructure. For many purposes the energy transfer fluid is simply water, either heated or chilled, and possibly containing anti-freeze and corrosion inhibitors. Alternatively it may be a refrigerant fluid such as CFC-free refrigerants.

The tiles are intended to be employed in a conventional framework for a room ceiling or wall, with associated pipe-work to carry heating or cooling fluid to and from the tiles being located behind the tiles. Each tile includes two tail pipes, one at each end of the channel, to connect it to the pipe-work. Depending upon the configuration of the room and of the framework the heating or cooling means associated with the tiles may be located in a space behind the tiles or located remote from the tiles, for example outside the room.

The facing sheet is preferably constructed of metal, most preferably of steel. It should be of a thickness that resists distortion of the tile from its required flat shape. The preferred thickness depends on the area of the tile but for a square tile with 725 mm sides the thickness is preferably in the range 0.7 to 0.8mm. The sheet may also include perforations. These may be beneficial in improving the acoustic properties of the tile by reducing sound reflection within the room. The sheet can if desired carry a decorative coating, for example of paint. The plates are suitably welded together.

The channelled member can be formed by the following procedure from two thin flat metal plates. Non-bonding ink, for example a titanium-based ink, is applied to one or both of the plates, for example by silk screen printing, in the pattern required for the fluid channel. The plates are brought together as a sandwich with the ink between them. The sandwich is subjected to sufficient heat and pressure to cause the plates to weld together, except in the area of the applied ink pattern where bonding is prevented by the presence of the ink. The so-welded sandwich is placed between a solid base and a firm but resilient cover and compressed air is fed into one end of the pattern area. The solid base prevents bending of one plate but the resilient cover permits inflation of the other plate into the required channel shape under the action of the compressed air.

Thus the invention further provides a method of forming a heat transfer tile intended for heating or cooling a room and comprising a flat facing sheet, a heat exchange element and an insulation board, characterised in that the heat exchange element is a channelled member comprising a flat plate adjacent to the facing sheet and a shaped plate welded to the flat plate and is secured to the facing sheet by adhesive, wherein the configuration of the shaped plate provides a elongated channel between the plates for passage of a heating or cooling fluid through the tile.

In one embodiment of the invention the facing sheet includes side flanges shaped to hold the sheet, and thus the assembled tile, in position in a framework in the room ceiling or wall.

The heat exchange element is preferably secured to the facing sheet by a layer of adhesive. In addition to holding the element in place within the tile, the presence of an adhesive layer helps to absorb any stresses caused by differential expansion and contraction of the heat exchange element and the facing sheet upon heating up or cooling down of the tile. Such differential movement may otherwise lead to distortion of the tile from its required flat shape.

Suitable examples of adhesives include acetate, acrylic, cellulosic, epoxy, latex and polyurethane adhesives. A two-part epoxy resin known as E32 is generally preferred. The adhesive is preferably seeded with heat conducting particles, for example containing about 25% by weight of aluminium powder of about 10 µm average particle size, to assist heat exchange through it. The adhesive must serve the conflicting requirements of on the one hand being sufficiently thin to form the least possible barrier to heat exchange and on the other hand being sufficiently thick to provide the required adhesion and to absorb differential stresses between the facing sheet and the heat exchange element. In general the preferred thickness of the adhesive layer is < 1 mm.

Conveniently the adhesive between the element and facing sheet is applied by silk screening. This facilitates application of a uniform thickness of adhesive across the whole surface of the tile.

The material forming the plates of the heat exchange element is preferably copper and most preferably aluminium. The plate thickness is preferably small, most suitably in the range 0.4 to 4.0 mm per plate.

The choice of shape and dimensions of the elongated channel provided by the channel within the heat exchange element is made in advance of formation of the element and is achieved according to the construction procedure described above. The choice is also affected by the nature of the fluid to be passed though the channel and the need to achieve good heat exchange while it is passing through the channel. The objective is to provide an energy efficient, easy flow pattern. Good heat exchange requires a significant flow volume across a high proportion of the surface area of the tile, while at the same time requiring a relatively slow flow past any given point. A relatively wide flow path is therefore desirable.

The configuration of the elongated channel is determined by the pattern in which the plates of the heat exchange element are bonded to each other. In one embodiment of the invention the elongated channel includes a plurality of individual paths across the width of the tile, supplied from a common feed channel at one side of the tile and drained by a common outlet channel at the other side of the tile. In a further embodiment the channel is in the form of a continuous sinuous path. In another embodiment the plates are bonded in a patch pattern, providing multiple paths around the bonded patches.

The configuration of the supply and return tail pipes for the tile should also be chosen to provide an energy efficient, easy flow pattern. These can be angled from the channel to allow for ease of connection to the pipe-work behind the tile.

In one embodiment of the invention intended for tiles used with refrigerant fluid, the channel includes a portion of narrow cross section and a portion of wider cross section. For cooling duties, refrigerant is supplied as liquid to the small cross section portion, expands, evaporates and cools as it passes into the wider section and flows as a cooling vapour stream through the remainder of the wider section. For heating duties the fluid is supplied to the wider section as warm vapour, cools as it passes through the wider section and into the narrow section, condenses and leaves the channel as liquid.

Like the facing sheet, the heat exchange element may also include perforations, again with a view to improving the acoustic properties of the tile. The perforations must necessarily be through portions of the element other than between the elongated channel for fluid.

The insulation board is preferably formed from mineral fibre. In general it preferably has a thickness in the range 10 to 20 mm, with a density in the region of 400 to 500 kg/m³. It is preferably held in place by mechanical means, for example by metal tabs, rather than by an adhesive. The objective here is to provide good acoustic and insulation properties for the complete tile.

Tiles according to the invention can either be used as the sole source of heating and cooling in a room, or if desired to supplement other heating and cooling systems. They are especially well suited to use in rooms housing computer equipment.

Compared with previously proposed heat transfer tiles for use in rooms the tiles of the invention provide a substantial increase in efficiency. This is achieved by a high level of contact between the energy transfer fluid and the heat exchange material, which can provide a 30% increase in efficiency over a tube/plate heat exchanger.

The invention is further illustrated with reference to the accompanying drawings, in which:
Figure 1 is a perspective view of part of a room ceiling fitted with heat transfer tiles according to the invention, showing the framework in which they are held and the means for supply and return of the energy transfer fluid.

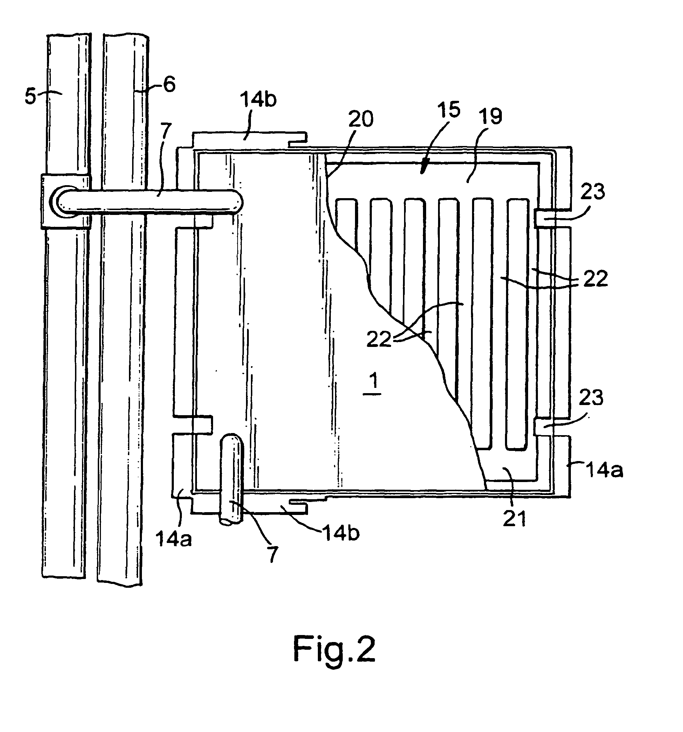

Figure 2 is a plan view of a heat transfer tile illustrated in Figure 1. partly cut away so as to show the configuration of the fluid channel.

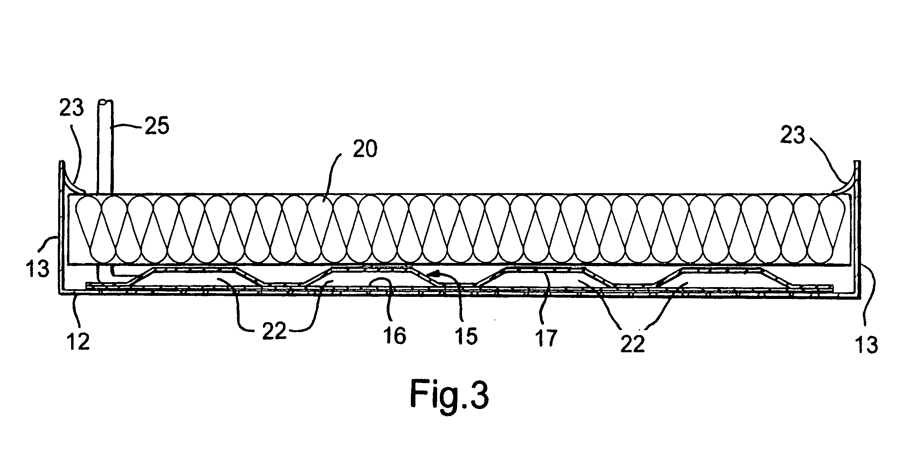

Figure 3 is a side view of a cross section of a heat transfer tile as illustrated in Figures 1 and 2 but with the scale of some of the elements increased so as to facilitate an understanding of the constructional details.

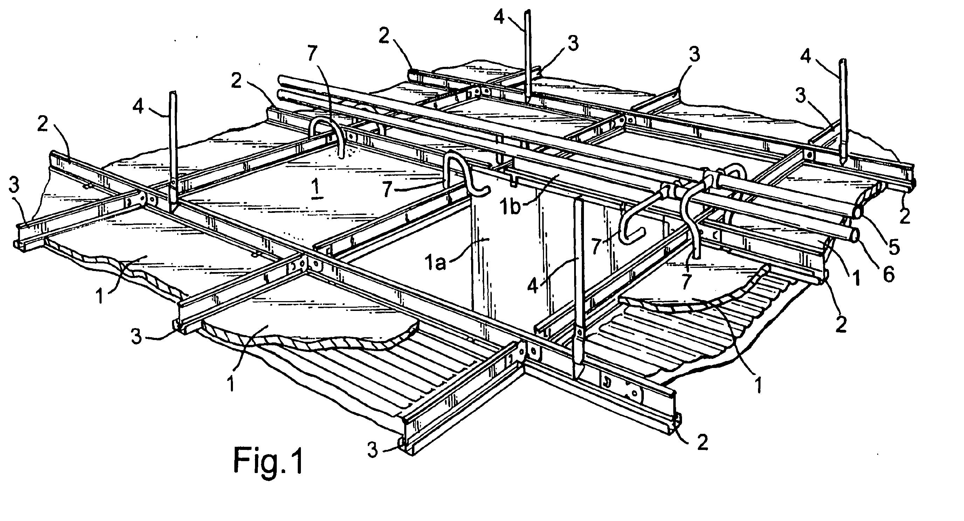

The ceiling illustrated in figure 1 has a plurality of tiles, indicated generally by the numeral 1, in a framework composed of extruded aluminium runners 2 and cross pieces (noggins) 3. The framework is attached to the floor above by hangers 4. Most of the tiles 1 are shown in their installed horizontal position but two (1a and 1b) are shown hanging vertically downwards prior to their final positioning. A header flow pipe 5 and a header outlet pipe 6 carry energy transfer fluid to and from the tiles 1. Flexible plastic tubes 7 connect the tiles 1 to the headers 5 and 6 and to each other.

Each tile 1 comprises a flat facing sheet 12 forming its base. The edges of the sheet 12 are bent to form vertical side pieces 13 and horizontal flanges 14 on each side of the tile. Two of the flanges (14a) extend substantially the full length of the respective side, but two (14b) extend for just a portion of the length so as to permit insertion of the tile 1 into the respective space in the ceiling framework (2,3).

A channelled heat exchange member 15 rests on the sheet 12 and is bonded thereto by a 0.8 mm layer of two-part epoxy resin (E32) adhesive. [The adhesive layer is too thin to be depicted in the figures]. The channelled member 15 comprises a flat lower plate 16 of aluminium welded to a shaped upper plate 17, also of aluminium. The configuration of the upper plate 17 creates between itself and the lower plate 16 a continuous channel 18 for the energy transfer fluid. The channel 18 comprises a common feed channel 19 at one side of the tile 1 and a common outlet channel 21 at the other side with a plurality of individual paths 22 between them across the width of the tile 1.

An insulation board 20 rests on the top of the plate sheet 17 and is held in place by retaining tabs 23 on the vertical sides 13 of the base sheet 12. A copper tail pipe 25, connectable to a plastic tube 7, leads to one end of the channel 18 to convey heating or cooling fluid thereto and a corresponding tail pipe (not shown) at the other end of the channel 18 carries the fluid away for re-heating or re-cooling.

The illustrated version of channelled member 15 was formed by the following procedure. The member 15 is made from aluminium plates 16 and 17, both initially flat. Titanium-based ink is applied to plate 16 by silk screen printing in the pattern required for the channel 18. The plate 16 is then placed on top of the plate 17 to form a sandwich with the ink between them. The sandwich is heated to a temperature of 1000°C and pressure applied by rollers to the upper plate 17 to weld (bond) it to plate 16, except in the area of the applied ink pattern. In the pattern area, bonding of the plates 16 and 17 is prevented by the presence of the ink. The sandwich is placed between a solid base and a hard rubber upper plate and compressed air is fed into one end of the pattern area. The solid base prevents inflation of the plate 16 but the rubber plate permits inflation of the plate 17 under the action of the compressed air, resulting in the formation of the channel 18.

## Claims

1. A heat transfer tile (1) for heating or cooling a room, which tile (1) comprises a heat exchange element and an insulation board (20),
wherein the heat exchange element is a channelled member (15) comprising a first plate (16) and a second plate (17) bonded to the first plate (16), wherein at least one of the first (16) and second plates (17) is shaped and wherein the configuration of the shaped plate provides an elongated channel (18) between the plates (16,17) for passage of an energy transfer fluid through the tile (1), **characterised in that** the tile (1) further comprises a flat facing sheet (12) adjacent to the first plate (16) and **in that** the channelled member (15) is obtained by taking two flat metal plates, applying non-bonding ink to one or both of the plates, in the pattern required for the elongated channel (18), bringing the plates together as a sandwich with the ink between them, subjecting the sandwich to sufficient heat and pressure to cause the plates to weld together, except in the area of the applied ink pattern where bonding is prevented by the presence of the ink, placing the welded sandwich between a solid base and a firm but resilient cover, feeding compressed air into one end of the pattern area so that inflation of the metal of the flat plate adjacent to the resilient cover is permitted, to form the elongated channel shape under the action of the compressed air.

2. A heat transfer tile (1) as claimed in claim 1, in which the facing sheet (12) is a steel sheet having a thickness in the range 0.7 to 0.8 mm.

3. A heat transfer tile as claimed in claim 1 or claim 2, in which the facing sheet (12) carries a decorative coating.

4. A heat transfer tile as claimed in any preceding claim, in which the facing sheet (12) includes perforations.

5. A heat transfer tile as claimed in any preceding claim, in which the facing sheet (12) includes side flanges (13, 14) shaped to hold it in position in a framework.

6. A heat transfer tile as claimed in any preceding claim, in which the heat exchange element is secured to the facing sheet (12) by a layer of adhesive.

7. A heat transfer tile as claimed in claim 6, in which the adhesive is selected ' from acetate, acrylic, cellulosic, epoxy, latex and polyurethane adhesives.

8. A heat transfer tile as claimed in claim 6 or claim 7, in which the adhesive is seeded with heat conducting particles.

9. A heat transfer tile as claimed in any of claims 6 to 8, in which the adhesive is present in a layer having a thickness of less than 1 mm.

10. A heat transfer tile as claimed in any of claims 6 to 9, in which the adhesive is applied by silk screening.

11. A heat transfer tile as claimed in any preceding claim, in which the material forming the plates of the heat exchange element is aluminium with a thickness in the range 0.4 to 4.0 mm.

12. A heat transfer tile as claimed in any preceding claim and intended for tiles used with refrigerant fluid, in which the elongated channel (18) includes a portion of narrow cross section and a portion of wider cross section.

13. A heat transfer tile as claimed in any preceding claim, in which the insulation board (20) is formed from mineral fibre having a thickness in the range 10 to 20 mm and a density in the region of 400 to 500 kg/m³

14. A heat transfer tile as claimed in any preceding claim, in which the insulation board (20) is held in place by mechanical means (23).

15. A heat transfer tile as claimed in any preceding claim, in which the first plate (15) adjacent to the facing sheet (12) is flat and the second plate (17) is shaped.

16. A method of forming a heat transfer tile (1) intended for heating or cooling a room and comprising a heat exchange element and an insulation board (20), wherein the heat exchange element is a channelled member (15) comprising a first plate (16) and a second plate (17) bonded to the first plate (16), wherein at least one of the first and second plates is shaped and wherein the configuration of the shaped plate provides an elongated channel (18) between the plates (16,17) for passage of an energy transfer fluid through the tile (1), **characterised in that** the heat transfer tile (1), further comprises a flat facing sheet (12), wherein the heat exchange element is secured to the facing sheet (12) by adhesive, and **in that** the channelled member (15) is obtained by taking two flat metal plates, applying non-bonding ink to one or both of the plates, in the pattern required for the elongated channel (18), bringing the plates together as a sandwich with the ink between them, subjecting the sandwich to sufficient heat and pressure to cause the plates to weld together, except in the area of the applied ink pattern where bonding is prevented by the presence of the ink, placing the welded sandwich between a solid base and a firm but resilient cover, feeding compressed air into one end of the pattern area so that inflation of the metal of the flat plate adjacent to the resilient cover is permitted, to form the elongated channel shape under the action of the compressed air.

## Patentansprüche

1. Wärmetauschpaneel (1) für das Erwärmen oder Kühlen eines Raumes, wobei das Paneel (1) ein Wärmeaustauschelement und eine Dämmplatte (20) aufweist,
wobei das Wärmeaustauschelement ein mit Kanälen versehenes Element (15) ist, das eine erste Platte (16) und eine zweite Platte (17), die an die erste Platte (16) gebunden ist, aufweist, wobei mindestens eine der ersten (16) und zweiten Platte (17) geformt ist, und wobei die Konfiguration der geformten Platte einen länglichen Kanal (18) zwischen den Platten (16, 17) für den Durchgang eines Energieübertragungsfluids durch das Paneel (1) bereitstellt, **dadurch gekennzeichnet, dass** das Paneel (1) außerdem eine flache Deckschichtplatte (12) benachbart der ersten Platte (16) aufweist, und dass das mit Kanälen versehene Element (15) erhalten werden kann, indem zwei flache Metallplatten genommen werden, eine nichtbindende Farbe auf eine oder beide der Platten in dem Muster aufgebracht wird, das für den länglichen Kanal (18) erforderlich ist, die Platten als ein Schichtelement mit der Farbe zwischen ihnen zusammengebracht werden, das Schichtelement ausreichend Wärme und Druck unterworfen wird, um zu bewirken, dass die Platten miteinander verschweißen, außer in dem Bereich des aufgebrachten Farbmusters, wo eine Bindung durch das Vorhandensein der Farbe verhindert wird, das geschweißte Schichtelement zwischen einer soliden Basis und einer festen aber elastischen Abdeckung angeordnet wird, Druckluft in ein Ende des Musterbereiches so eingeführt wird, dass ein Aufblasen des Metalls der flachen Platte benachbart der elastischen Abdeckung gestattet wird, um die längliche Kanalform unter der Wirkung von Druckluft zu bilden.

2. Wärmetauschpaneel (1) nach Anspruch 1, bei dem die Deckschichtplatte (12) eine Stahlplatte mit einer Dicke im Bereich von 0,7 bis 0,8 mm ist.

3. Wärmetauschpaneel nach Anspruch 1 oder Anspruch 2, bei dem die Deckschichtplatte (12) eine dekorative Beschichtung trägt.

4. Wärmetauschpaneel nach einem der vorhergehenden Ansprüche, bei dem die Deckschichtplatte (12) Perforationen umfasst.

5. Wärmetauschpaneel nach einem der vorhergehenden Ansprüche, bei dem die Deckschichtplatte (12) Seitenflansche (13, 14) umfasst, die geformt sind, um sie in Position in einem Rahmen zu halten.

6. Wärmetauschpaneel nach einem der vorhergehenden Ansprüche, bei dem das Wärmeaustauschelement an der Deckschichtplatte (12) mittels einer Schicht Klebstoff gesichert wird.

7. Wärmetauschpaneel nach Anspruch 6, bei dem der Klebstoff unter Acetat-, Acryl-, Cellulose-, Epoxid-, Latex- und Polyurethanklebstoffen ausgewählt wird.

8. Wärmetauschpaneel nach Anspruch 6 oder Anspruch 7, bei dem der Klebstoff mit wärmeleitenden Teilchen geimpft wird.

9. Wärmetauschpaneel nach einem der Ansprüche 6 bis 8, bei dem der Klebstoff in einer Schicht mit einer Dicke von weniger als 1 mm vorhanden ist.

10. Wärmetauschpaneel nach einem der Ansprüche 6 bis 9, bei dem der Klebstoff mittels Siebdruck aufgebracht wird.

11. Wärmetauschpaneel nach einem der vorhergehenden Ansprüche, bei dem das Material, das die Platten des Wärmeaustauschelementes bildet, Aluminium mit einer Dicke im Bereich von 0,4 bis 4,0 mm ist.

12. Wärmetauschpaneel nach einem der vorhergehenden Ansprüche und für Paneelen beabsichtigt, bei denen Kältemittel verwendet wird, bei dem der längliche Kanal (18) einen Abschnitt mit einem schmalen Querschnitt und einen Abschnitt mit einem breiteren Querschnitt aufweist.

13. Wärmetauschpaneel nach einem der vorhergehenden Ansprüche, bei dem die Dämmplatte (20) aus Mineralfasern mit einer Dicke im Bereich von 10 bis 20 mm und einer Dichte im Bereich von 400 bis 500 kg/m³ gebildet wird.

14. Wärmetauschpaneel nach einem der vorhergehenden Ansprüche, bei dem die Dämmplatte (20) mittels mechanischer Mittel (23) an Ort und Stelle gehalten wird.

15. Wärmetauschpaneel nach einem der vorhergehenden Ansprüche, bei dem die erste Platte (15) benachbart der Deckschichtplatte (12) flach und die zweite Platte (17) geformt ist.

16. Verfahren zur Herstellung eines Wärmetauschpaneels (1), das für das Erwärmen oder Kühlen eines Raumes gedacht ist und ein Wärmeaustauschelement und eine Dämmplatte (20) aufweist, wobei das Wärmeaustauschelement ein mit Kanälen versehenes Element (15) ist, das eine erste Platte (16) und eine zweite Platte (17), die an die erste Platte (16) gebunden ist, aufweist, wobei mindestens eine der ersten und zweiten Platte geformt ist, und wobei die Konfiguration der geformten Platte einen länglichen Kanal (18) zwischen den Platten (16, 17) für den Durchgang eines Energieübertragungsfluids durch das Paneel (1) bereitstellt, **dadurch gekennzeichnet, dass** das Wärmetauschpaneel (1) außerdem eine flache Deckschichtplatte (12) aufweist, wobei das Wärmeaustauschelement an der Deckschichtplatte (12) mittels Klebstoff gesichert ist, und dass das mit Kanälen versehene Element (15) erhalten werden kann, indem zwei flache Metallplatten genommen werden, eine nichtbindende Farbe auf eine oder beide der Platten in dem Muster aufgebracht wird, das für den länglichen Kanal (18) erforderlich ist, die Platten als ein Schichtelement mit der Farbe zwischen ihnen zusammengebracht werden, das Schichtelement ausreichend Wärme und Druck unterworfen wird, um zu bewirken, dass die Platten miteinander verschweißen, außer in dem Bereich des aufgebrachten Farbmusters, wo eine Bindung durch das Vorhandensein der Farbe verhindert wird, das geschweißte Schichtelement zwischen einer soliden Basis und einer festen aber elastischen Abdeckung angeordnet wird, Druckluft in ein Ende des Musterbereiches so eingeführt wird, dass ein Aufblasen des Metalls der flachen Platte benachbart der elastischen Abdeckung gestattet wird, um die längliche Kanalform unter der Wirkung von Druckluft zu bilden.

## Revendications

1. Dalle de transfert thermique (1) pour chauffer ou refroidir une pièce, la dalle (1) comprenant un élément d'échange de chaleur et une plaque isolante (20);
l'élément d'échange de chaleur étant un élément cannelé (15) comprenant une première plaque (16) et une deuxième plaque (17) reliée à la première plaque (16), au moins une des première (16) et deuxième (17) plaques étant profilée, la configuration de la plaque profilée établissant un canal allongé (18) entre les plaques (16, 17) pour le passage d'un fluide de transfert d'énergie à travers la dalle (1), **caractérisée en ce que** la dalle (1) comprend en outre une feuille de parement plate (12) adjacente à la première plaque (16) et **en ce que** l'élément cannelé (15) est produit en prenant deux plaques métalliques plates, en appliquant une encre non liante sur une plaque ou les deux plaques, dans un motif requis pour le canal allongé (18), en rapprochant les plaques en forme de sandwich, l'encre étant agencée entre elles, en soumettant le sandwich à une chaleur et une pression suffisantes pour entraîner l'assemblage des plaques par soudage, à l'exception de la zone du motif d'encre appliqué, où la liaison est empêchée par la présence de l'encre, en plaçant le sandwich soudé entre une base solide et une couverture ferme mais élastique, en amenant de l'air comprimé dans une extrémité de la zone du motif, de sorte à permettre le gonflement du métal de la plaque plate adjacente à la couverture élastique, pour former la forme du canal allongé sous l'action de l'air comprimé.

2. Dalle de transfert thermique (1) selon la revendication 1, dans laquelle la feuille de parement (12) est une feuille d'acier ayant une épaisseur comprise dans l'intervalle allant de 0,7 à 0,8 mm.

3. Dalle de transfert thermique selon les revendications 1 ou 2, dans laquelle la feuille de parement (12) comporte un revêtement décoratif.

4. Dalle de transfert thermique selon les revendications précédentes, dans laquelle la feuille de parement (12) englobe des perforations.

5. Dalle de transfert thermique selon l'une quelconque des revendications précédentes, dans laquelle la feuille de parement (12) englobe des brides latérales (13, 14) formées de sorte à la retenir dans sa position dans un châssis.

6. Dalle de transfert thermique selon l'une quelconque des revendications précédentes, dans laquelle l'élément d'échange de chaleur est fixé sur la feuille de parement (12) par une couche d'adhésif.

7. Dalle de transfert thermique selon la revendication 6, dans laquelle l'adhésif est sélection parmi des adhésifs d'acétate, acryliques, cellulosiques, époxydes, de latex et de polyuréthane.

8. Dalle de transfert thermique selon les revendications 6 ou 7, dans laquelle l'adhésif est ensemencé de particules conductrices de chaleur.

9. Dalle de transfert thermique selon l'une quelconque des revendications 6 à 8, dans laquelle l'adhésif est présent dans une couche ayant une épaisseur inférieure à 1 mm.

10. Dalle de transfert thermique selon l'une quelconque des revendications 6 à 9, dans laquelle l'adhésif est appliqué par sérigraphie.

11. Dalle de transfert thermique selon l'une quelconque des revendications précédentes, dans laquelle le matériau formant les plaques de l'élément d'échange de chaleur est de l'aluminium ayant une épaisseur comprise dans l'intervalle allant de 0,4 à 4,0 mm.

12. Dalle de transfert thermique selon l'une quelconque des revendications précédentes, destinée à des dalles utilisées avec un fluide réfrigérant, le canal allongé (18) englobant une partie à section transversale étroite et une partie à section transversale plus grande.

13. Dalle de transfert thermique selon l'une quelconque des revendications précédentes, dans laquelle la plaque isolante (20) est composée de fibres minérales ayant une épaisseur comprise dans l'intervalle allant de 10 à 20 mm et une densité comprise dans l'intervalle allant de 400 à 500 kg/m³.

14. Dalle de transfert thermique selon l'une quelconque des revendications précédentes, dans laquelle la plaque isolante (20) est retenue dans sa position par un moyen mécanique (23).

15. Dalle de transfert thermique selon l'une quelconque des revendications précédentes, dans laquelle la première plaque (15) adjacente à la feuille de parement (12) est plate, la deuxième plaque (17) étant profilée.

16. Procédé de production d'une dalle de transfert thermique (1) destinée à chauffer ou à refroidir une pièce et comprenant un élément d'échange thermique et une plaque isolante (20), l'élément d'échange thermique étant un élément cannelé (15) comprenant une première plaque (16) et une deuxième plaque (17) reliée à la première plaque (16), au moins une des première et deuxième plaques étant profilée, la configuration de la plaque profilée établissant un canal allongé (18) entre les plaques (16, 17) pour le passage d'un fluide de transfert d'énergie à travers la dalle (1), **caractérisé en ce que** la dalle de transfert thermique (1) comprend en outre une feuille de parement plate (12), l'élément d'échange de chaleur étant fixé sur la feuille de parement (12) par un adhésif, l'élément cannelé (15) étant produit en prenant deux plaques métalliques plates, en appliquant une encre non liante sur une plaque ou les deux plaques, dans un motif requis pour le canal allongé (18), en rapprochant les plaques en forme de sandwich, l'encre étant agencée entre elles, en soumettant le sandwich à une chaleur et une pression suffisantes pour entraîner l'assemblage des plaques par soudage, à l'exception de la zone du motif d'encre appliqué, où la liaison est empêchée par la présence de l'encre, en plaçant le sandwich soudé entre une base solide et une couverture ferme mais élastique, en amenant de l'air comprimé dans une extrémité de la zone du motif, de sorte à permettre le gonflement du métal de la plaque plate adjacente à la couverture élastique, pour former la forme du canal allongé sous l'action de l'air comprimé.
